(19) **Europäisches Patentamt**
**European Patent Office**
**Office européen des brevets**

(11) **EP 1 867 056 B1**

(12) **EUROPEAN PATENT SPECIFICATION**

(45) Date of publication and mention
of the grant of the patent:
**16.09.2009 Bulletin 2009/38**

(51) Int Cl.:
*H04B 1/28* *(2006.01)*  *H04B 1/24* *(2006.01)*
*H04B 1/69* *(2006.01)*

(21) Application number: **06727675.8**

(22) Date of filing: **16.03.2006**

(86) International application number:
**PCT/IB2006/050827**

(87) International publication number:
**WO 2006/103587 (05.10.2006 Gazette 2006/40)**

(54) **SIGNAL RECEIVER FOR WIDEBAND WIRELESS COMMUNICATION**

SIGNALEMPFÄNGER FÜR DIE  DRAHTLOSE BREITBAND KOMMUNIKATION

RECEPTEUR DE SIGNAUX POUR COMMUNICATION SANS FIL A LARGE BANDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.03.2005 EP 05102497**

(43) Date of publication of application:
**19.12.2007 Bulletin 2007/51**

(73) Proprietor: **NXP B.V.**
**5656 AG Eindhoven (NL)**

(72) Inventors:
• **LEENAERTS, Dominicus, M., W.**
**NL-5656 AA Eindhoven (NL)**

• **VAN BERKEL, Cornelis, H.**
**NL-5656 AA Eindhoven (NL)**

(74) Representative: **van der Veer, Johannis Leendert et al**
**NXP Semiconductors B.V.**
**IP&L Department**
**High Tech Campus 32**
**5656 AE Eindhoven (NL)**

(56) References cited:
**EP-A- 0 939 506          EP-A- 1 168 637**
**WO-A-20/04001998     US-A- 5 412 690**
**US-A1- 2004 047 285**

## Description

The invention relates to a signal receiver for wideband wireless communication and, more particularly but not necessarily exclusively, to a signal receiver for use in a wireless local area network (WLAN) operating in the 60GHz ISM band.

Ultra wideband (UWB) is an RF wireless technology, and provides a technique for performing radio communication and radio positioning which relies on sending a signal comprising ultra-short pulses occupying frequencies from zero to one or more GHz. These pulses represent from one to only a few cycles of an RF carrier wave.

International Patent application No. WO 2004/001998 describes an ultra-wideband (UWB) signal receiver comprising a filter bank for dividing a received RF signal into a plurality of frequency sub-bands. The sub-band signals are then digitized using a relatively low sample rate, following which each digitized sub-band signal is transformed into the frequency domain and the spectrum of the received signal is reconstructed.

In wireless communication applications, there is a need for increasingly higher data rates. However, for extremely high data rate point-to-point and point-to-multipoint applications, UWB often gives unsatisfactory results because of the trade-off between signal-to-noise ratio and bandwidth. The 60 GHz band (roughly 59 - 63GHz), an unlicensed frequency band, has thus been investigated as a potential band for wireless high data rate transmission, due to the wide band (up to 4 GHz) which is available.

In general, the use of digital signal processing techniques to implement at least the baseband processing of a wireless receiver is known to provide benefits such as increased versatility and decreased cost, provided the frequency of the signals to be digitized is not too high. Thus, relatively low speed analog-to-digital converters can be used in the receiver of WO 2004/001998. In other systems, a received RF signal is mixed down to a low IF (intermediate frequency) before digitization, because digitization at the original high frequency requires an unacceptably high speed analog-to-digital converter (ADC). The term intermediate frequency (IF) used herein refers to a frequency to which a carrier frequency is shifted as an intermediate step in signal (transmission or) reception; and, if a heterodyne Signal is down-converted, then:

$$f_{IF} = f_{RF} - f_{LO}$$

where $f_{IP}$ the intermediate frequency, $f_{RF}$ is the radio frequency and $f_{LO}$ is the local oscillator frequency. Thus, if the bandwidth is 4 GHz and a zero-IF architecture is adopted, a 2 GHz bandwidth is generated at the positive frequency side, which is almost RF in itself, and therefore makes IF filtering on silicon difficult.

US 5,412,690 diseases a method and apparatus for receiving electromagnetic radiation within a frequency band. The receiving is accomplished by intercepting electromagnetic radiation within the frequency band and converting the intercepted electromagnetic radiation into an electrical signal Subsequently, a portion of the electrical signal is digitized into digitized signals. Each digitized signal represents the intercepted electromagnetic radiation within a portion of the frequency band. Finally, a composite digitized signal is generated from at least two of the digitized signals. Alternatively, the receiving process may be enhanced by intercepting first electromagnetic radiation within a portion of the frequency band and by intercepting second electromagnetic radiation within another portion of the frequency band. Subsequently, the first and the second electromagnetic radiation is combined into a composite electromagnetic radiation waveform. The composite electromagnetic radiation waveform is converted into an electrical signal which may be processed into digitized signals which form a composite digitized signal.

It is an object of the present invention to provide a signal receiver for receiving a wideband signal to achieve relatively higher data rates, wherein processing in the analog domain is reduced in complexity.

In accordance with a first aspect of the present invention, there is provided a signal receiver according to claim 1.

The present invention extends to a wireless area network having at least one transmitter for transmitting a wideband radio frequency signal and at least one signal receiver as defined above.

As a result of the signal receiver of the present invention, lower complexity in respect of the processing in the analog domain is achieved, particularly in respect of, for example, the respective gain controllers, IF filters and analog-to-digital converters. Furthermore, as a result of the present invention, it is possible to perform automic gain control in respect of each sub-band, thereby improving the quality of the resultant signal.

A plurality of digital filtering means may be provided, each digital filtering means having substantially the same band pass characteristic with respectively varying center frequencies corresponding to respective sub-carrier frequencies of the intermediate frequency sub-bands.

The power spectral density of the intermediate frequency signal band is preferably centered around the second carrier frequency, which is preferably substantially zero. The received radio frequency signal band may be in the 60 GHz (~59- 63 GHz) spectrum.

In all castes, the parallel processing of the sub-bands in the analog domain comprises at least low pass filtering and/or automatic gain control in respect thereof.

These and other aspects of the present invention will be apparent from, and elucidated with reference to, the embodiments described herein.

Embodiments of the present invention will now be described by way of examples only and with reference to the accompanying drawings, in which:

> Fig. 1 is a schematic diagram illustrating the principal components of a signal receiver according to a first exemplary embodiment of the first aspect of the present invention;
> Fig. 2 is a schematic diagram illustrating the principal components of a signal receiver according to a second exemplary embodiment of the first aspect of the present invention; and
> Fig. 3 is a schematic diagram illustrating the principal components of a signal receiver.

Thus, the present invention provides a signal receiver which receives a wideband radio frequency signal and divides it into sub-bands, before performing parallel processing and subsequent analog-to-digital conversion in respect of each sub-band in the analog domain. The resultant signals are then combined to reconstruct the signal for further processing in the digital domain.

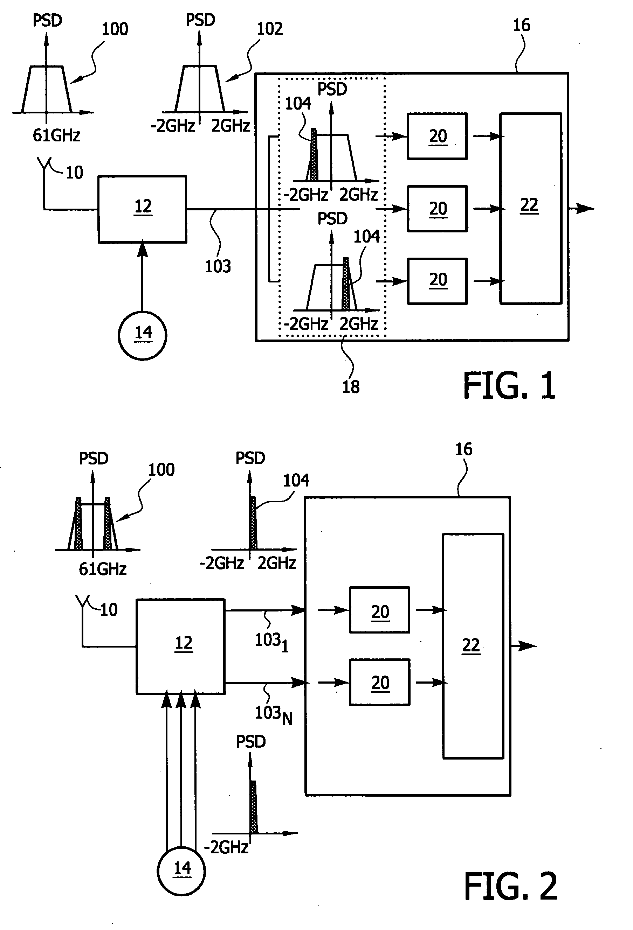

Referring to Fig. 1 of the drawings, in a first exemplary embodiment, a radio frequency signal 100 in the 60 GHz band is received by an antenna 10 and passed to a radio receiver 12. As shown, the power spectra density (PSD) is centered around a carrier frequency of 61GHz. The complete received radio frequency signal band 100 of bandwidth 4 GHz is down-converted by a radio frequency (RF) synthesizer in the radio receiver 12 to an intermediate frequency signal band 102. The RF synthesizer receives a local oscillator signal for this purpose from a voltage controlled oscillator 14, which is arranged and configured to generate a local oscillator signal at the PSD/carrier frequency or 61 GHz. A zero-IF architecture is employed which results in an intermediate frequency signal band 102 having a PSD/carrier frequency of zero, with 20Hz of the original bandwidth in the positive frequency domain and 2 GHz in the negative frequency domain.

The resultant intermediate frequency signal band 102 is then passed to the input 103 of an IF processing module 16. The IF processing module 16 comprises a bank 18 of digital filters for performing parallel digital filtering of the incoming IF signal band, each digital filter having substantially the same band pass characteristic but different respective center frequencies, so that the IF signal band 102 is effectively divided or 'chopped' into a plurality of respective IF sub-bands 104. This 'chopping' can be performed, for example, in the form of arbitrary 'bins' or based on OFDM sub-carrier frequencies (corresponding to respective center frequencies of the digital filters). Together, the plurality of sub-bands 104 are representative of the IF signal band 102, with the PSD frequency of zero being maintained.

Each sub-band 104 is then passed to a respective processing module 20 such that parallel processing of the IF sub-bands 104 can be performed in the analogue domain. Each processing module 20 comprises an active analog filter for selecting a channel of interest. Active filters suffer from high input noise level, which can easily dominate the receiver noise figure. Thus, a variable gain amplifier (VGA) embedded in an automatic gain control (AGC) loop is also provided in each processing module 20 to amplify each sub-band signal sufficiently to overcome filter noise. The processed signal is then passed to a respective analog-to-digital converter (ADC), also provided in the processing module 20. In the digital domain, the information from each of the sub-bands, which information was spread throughout the original signal band, is 'assembled' or combined for further processing at module 22, which gathers all of the information and processes it to extract the bits.

Thus, because each of the IF sub-bands are processed in parallel in the analogue domain, the design requirements for components, such as the AGC loop and ADC, are significantly relaxed relative to the situation whereby the complete signal band is treated unitarily. Of course, the IF filtering component is a little more complex because it effectively involves a bank of filters having the same band pass characteristic but changing center frequencies, as described above.

Referring to Fig. 2 of the drawings, an alternative exemplary embodiment of the first aspect of the present invention is illustrated schematically, in which like reference numerals are used to denote similar elements to those of the arrangement of Fig. 1. In the arrangement of Fig. 2, the original radio frequency received signal 100 is down-converted into IF sub-bands 104, for example, bins or based on their OFDM sub-carriers, and each sub-band 104 is passed to the IF processing module 16. In this case, of course, the IF processing module 16 has N inputs $103_1 \ldots\ldots 103_N$, compared with just one in the arrangement of Fig. 1.

As before, the IF processing module 16 comprises a respective processing module 20 to which respective sub-bands 104 are passed, such that parallel processing of the IF sub-hands 104 can be performed in the analogue domain. Each processing module 20 comprises an active analog filter for selecting a channel of interest. Active filters suffer from high input noise level, which can easily dominate the receiver noise figure. Thus, a variable gain amplifier (VGA) embedded in an automatic gain control (AGC) loop is also provided in each processing module 20 to amplify each sub-band signal sufficiently to overcome filter noise. The processed signal is then passed to a respective analog-to--digital converter (ADC), also provided in the processing module 20. In the digital domain, the information from each of the sub-bands, which information was spread throughout the original signal band, is 'assembled' or combined for further processing at module 22, which gathers all of the information and processes it to extract the bits.

Again, because each of the IF sub-bands are processed in parallel in the analogue domain, the design requirements for analogue processing components such as the AGC loop and ADC are relaxed, as is the filtering components, since fixed low pass filtering is employed. However, the RF synthesizer in the radio receiver 12 is more complex than that of the arrangement of Fig. 1 because more oscillator signals are required to be generated at once (i.e. in respect of each IF sub-band to be generated) is accordance with a multi-tone concept similar to that of UWB systems.

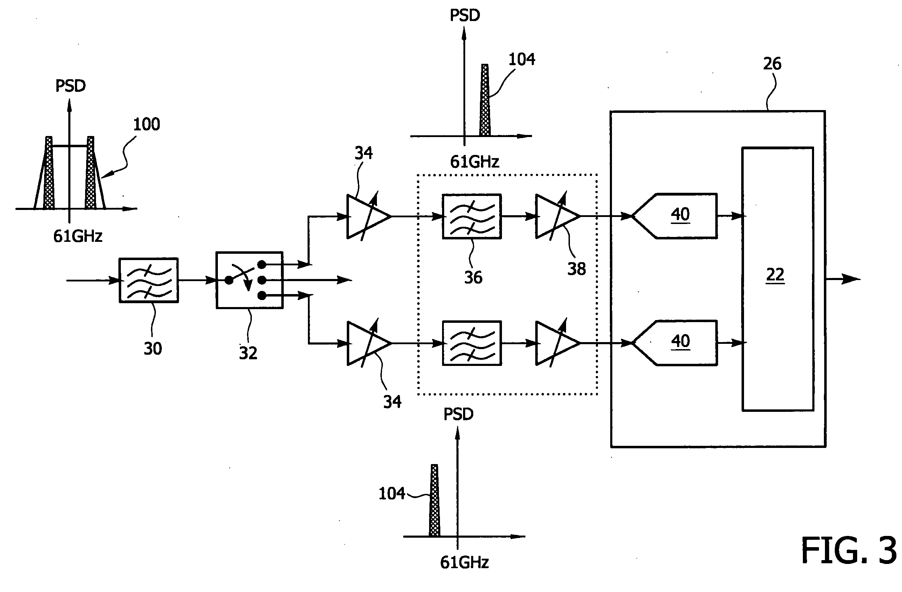

Referring to Fig. 3 of the drawings, in an arrangement which employs sub-samping, the received RF signal 100 is passed via a band pass filter 30 to a sampler 32 which samples the received signal 100 with a frequency lower than the RF carrier frequency (which is 61 GHz in this case). Each sampled signal is then passed to a respective low noise amplifier (LNA) 34, a band pass filter 36 and an RF variable gain amplifier (VGA) 38 and then to a respective analog-to-digital converter (ADC) 40 in an IF processing module 16. As before, in the digital domain, the information from each of the sub-bands, which information was spread throughout the original signal band, is 'assembled' or combined, for further processing at module 22, which gathers all of the information and processes it to extract the bits.

The band pass filters 36 are dedicated band pass filters at the bins around the RF carrier frequency (61Hz) but the AGC 38 and ADC are low frequency components. IF processing is again performed in parallel.

Thus, in all of the above exemplary embodiments of the present invention, there is parallel processing of sub-bands of the received signal band in the analogue (IF) domain. The main advantages of this include lower complexity in the analogue domain for components such as the analog-to-digital converters, gain controllers and IF filters, and also the ability to adjust the gain per "bin" or "sub-band", thereby improving the quality of the received signal.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A signal receiver comprising:

   - means (10) for receiving a wideband radio frequency signal (100) having a first carrier frequency,
   - means (12, 18) for generating a plurality of intermediate frequency sub-bands (104), each sub-band (104) being representative of a portion of the received radio frequency signal band (100) and said plurality of sub-bands (104) together defining an intermediate frequency signal band (104) having a second carrier frequency lower than said first carrier frequency and being representative of said received radio frequency signal band (100),
   - intermediate frequency processing means (20) for performing parallel processing of each of said sub-bands (104) in the analog domain and then performing analog-to-digital conversion of said processed sub-bands (104) and means (22) for combining the resultant digital signals for subsequent further processing,

   **characterized in that** the means (12, 18) for generating the plurality of intermediate frequency sub-bands (104) are arranged and configured to shift the carrier frequency of the received radio frequency signal to a lower intermediate frequency and then perform parallel filtering of the resultant signal band (102) to divide the signal band into a plurality of intermediate frequency sub-bands (104).

2. A signal receiver according to claim 1, wherein digital filtering means (18) are provided, each digital filtering means having substantially the same band pass characteristic with respectively varying center frequencies corresponding to respective sub-carrier frequencies of the intermediate frequency sub-bands (104).

3. A signal receiver according to claim 1, wherein the second carrier frequency in respect of the intermediate frequency signal band is substantially zero.

4. A signal receiver according to claim 1, wherein the received radio frequency signal band (100) is in the 60 GHz spectrum.

5. A wireless arca network having at least one transmitter for transmitting a wideband radio frequency signal and at least one signal receiver according to claim 1.

## Patentansprüche

1. Signalempfänger, umfassend:

   Mittel (10) zum Empfangen eines Breitband-Hochfrequenzsignals (100) mit einer ersten Trägerfrequenz,
   Mittel (12, 18) zum Erzeugen einer Vielzahl von Zwischenfrequenz-Unterbändern (104), wobei jedes Unterband (104) für einen Teil des empfangenen Hochfrequenzsignalbandes (100) repräsentativ ist und die Vielzahl der Unterbänder (104) gemeinsam ein Zwischenfrequenzsignalband (104) definieren, das eine zweite Trägerfrequenz niedriger als die erste Trägerfrequenz aufweist und für das empfangene Hochfrequenzsignalband (100) repräsentativ ist, Zwischenfrequenzverarbeitungsmittel (20) zum Durchführen einer Parallelverarbeitung aller Unterbänder (104) im analogen Bereich und anschließendes Durchführen einer Analog-zu-Digital-Umsetzung der verarbeiteten Unterbänder (104), sowie Mittel (22) zum Kombinieren der resultierenden digitalen Signale für eine anschließende weitere Verarbeitung,

   **dadurch gekennzeichnet, dass** die Mittel (12, 18) zum Erzeugen der Vielzahl der Zwischenfrequenz-Unterbänder (104) so ausgeführt und konfiguriert sind, dass sie die Trägerfrequenz des empfangenen Hochfrequenzsignals zu einer niedrigeren Zwischenfrequenz verschieben und anschließend eine parallele Filterung des resultierenden Signalbandes (102) durchführen, um das Signalband in eine Vielzahl von Zwischenfrequenz-Unterbändern (104) aufzuteilen.

2. Signalempfänger nach Anspruch 1, wobei digitale Filterungsmittel (18) vorgesehen sind, wobei jedes Filterungsmittel im Wesentlichen die gleiche Bandpasscharakteristik mit jeweils variierenden Mittenfrequenzen entsprechend den jeweiligen Unterträgerfrequenzen der Zwischenfrequenzunterbänder (104) aufweist.

3. Signalempfänger nach Anspruch 1, wobei die zweite Trägerfrequenz in Bezug auf das Zwischenfrequenzsignalband im Wesentlichen gleich Null ist.

4. Signalempfänger nach Anspruch 1, wobei das empfangene Hochfrequenzsignalband (100) im 60GHz-Frequenzband liegt.

5. Drahtloses Netzwerk, das wenigstens einen Sender zum Senden eines Breitband-Hochfrequenzsignals und wenigstens einen Signalempfänger nach Anspruch 1 aufweist.

## Revendications

1. Récepteur de signaux comprenant :

   - des moyens (10) pour recevoir un signal de fréquence radio à large bande (100) ayant une première fréquence de porteuse,
   - des moyens (12, 18) pour générer une pluralité de sous-bandes de fréquences intermédiaires (104), chaque sous-bande (104) étant représentative d'une partie de la bande du signal de fréquence radio reçu (100) et ladite pluralité de sous-bandes (104) définissant ensemble une bande du signal de fréquences intermédiaires (104) ayant une deuxième fréquence de porteuse inférieure à ladite première fréquence de porteuse et étant représentative de ladite bande de signal de fréquence radio reçu (100),
   - des moyens de traitement des fréquences intermédiaire (20) pour exécuter un traitement en parallèle de chacune desdites sous-bandes (104) dans le domaine analogique et exécuter ensuite une conversion analogique - numérique desdites sous-bandes traitées (104) et des moyens (22) permettant de combiner les signaux numériques résultants en vue d'un traitement supplémentaire ultérieur,

   **caractérisé en ce que** les moyens (12, 18) pour générer la pluralité des sous-bandes de fréquences intermédiaires (104) sont disposés et configurés pour décaler la fréquence de porteuse du signal de fréquence radio reçu vers une fréquence intermédiaire inférieure et pour exécuter ensuite un filtrage en parallèle de la bande de signal résultante (102) en vue de diviser la bande de signal en une pluralité de sous-bandes de fréquences intermédiaires (104).

2. Récepteur de signaux selon la revendication 1, dans lequel des moyens de filtrage numériques (18) sont fournis, chaque moyen de filtrage numérique présentant essentiellement la même caractéristique de bande passante avec des fréquences centrales variant respectivement en conformité avec les fréquences de sous-porteuse respectives des sous-bandes de fréquences intermédiaires (104).

3. Récepteur de signaux selon la revendication 1, dans lequel la deuxième fréquence de porteuse par rapport à la bande de signaux de fréquences intermédiaires est essentiellement nulle.

4. Récepteur de signaux selon la revendication 1, dans lequel la bande de signaux de fréquence radio reçue (100) se situe dans le spectre à 60 GHz.

5. Réseau local sans fil comportant au moins un émetteur pour émettre un signal de fréquence radio à lar-

**EP 1 867 056 B1**

ge bande et au moins un récepteur de signaux selon la revendication 1.

FIG. 1

FIG. 2

FIG. 3

EP 1 867 056 B1

**REFERENCES CITED IN THE DESCRIPTION**

**Patent documents cited in the description**

- WO 2004001998 A
- US 5412690 A